# FASCICULE DE BREVET EUROPEEN

(11) **EP 1 562 091 B1**
(45) Date de publication et mention de la délivrance du brevet: **07.06.2006**
(21) Numéro de dépôt: 05290050.3
(22) Date de dépôt: 10.01.2005
(51) Int. Cl.: G05D 1/06, B64C 5/02, B64C 9/00

(54) **Procédé pour améliorer l'atterrissage d'un aéronef**
Verfahren um die Landung eines Flugzeuges zu verbessern
Method for improving the landing of an aircraft

(30) Priorité: 06.02.2004 FR 0401134
(43) Date de publication de la demande: 10.08.2005
(73) Titulaire: AIRBUS France, 31060 Toulouse (FR)
(72) Inventeur: Boe, Régis, 31490 Leguevin (FR); Seve, Philippe, 31850 Montrabe (FR)
(74) Mandataire: Bonnetat, Christian

(56) Documents cités:
- EP-A- 0 809 165
- US-A- 4 291 853
- US-A- 4 790 494
- US-A- 5 779 191
- US-A1- 2002 121 575

## Description

La présente invention concerne un procédé pour améliorer l'atterrissage d'un aéronef.

On sait que certains aéronefs comportent un empennage horizontal stabilisateur, réglable en inclinaison. Un tel empennage horizontal réglable est, dans la technique, désigné par l'une ou l'autre des abréviations PHR (pour Plan Horizontal Réglable) ou THS (pour Trimmable Horizontal Stabiliser). Tout comme un empennage horizontal fixe, un empennage horizontal réglable est pourvu de gouvernes de profondeur formant le bord de fuite dudit empennage horizontal réglable.

Un empennage horizontal réglable peut être braqué dans le sens à cabrer ou à piquer et il est utilisé dans certaines phases de vol. Par exemple, lors de l'atterrissage de l'aéronef, il est usuel de braquer à cabrer ledit empennage horizontal réglable, par action du pilote ou d'un système automatique, lesdites gouvernes de profondeur étant dans le prolongement aérodynamique dudit empennage et la valeur de l'angle de braquage de l'empennage horizontal réglable dépendant de plusieurs paramètres de l'aéronef, tels que la position longitudinale du centre de gravité, la masse totale à l'atterrissage, la configuration des becs de bord d'attaque et des volets de bord de fuite, la poussée, la vitesse au moment de l'atterrissage, etc ...

Cette valeur de l'angle de braquage est importante, car elle conditionne le comportement de l'avion pendant la phase de l'arrondi d'atterrissage et de la prise de contact de l'aéronef avec le sol.

Après cette prise de contact de l'aéronef avec le sol, les gouvernes de profondeur attachées à l'empennage horizontal réglable sont commandées par le pilote de l'aéronef pour prendre, à partir de leur position dans le prolongement aérodynamique dudit empennage, une position dans le sens à piquer afin de basculer vers le bas, autour du train d'atterrissage principal, le nez dudit aéronef roulant sur le sol. Ainsi, le train avant (qui se trouve sous le nez) peut, à son tour, prendre contact avec le sol.

Il peut se faire que, dans certaines conditions de l'aéronef et/ou de l'environnement extérieur, les gouvernes de profondeur n'aient pas l'autorité suffisante pour faire rapidement basculer le nez de l'aéronef vers le bas, de sorte que celui-ci roule un long moment sur le sol avec le nez levé et le train avant non au contact du sol, ce qui entraîne un retard dans le freinage.

La présente invention a pour objet de remédier à cet inconvénient.

A cette fin, selon l'invention, le procédé pour améliorer l'atterrissage d'un aéronef comportant un empennage horizontal réglable auquel sont articulées des gouvernes de profondeur, ledit empennage horizontal réglable étant braqué à cabrer d'un angle d'inclinaison de valeur prédéterminée en vue de la prise de contact dudit aéronef avec le sol et lesdites gouvernes de profondeur étant braquées à piquer après ladite prise de contact pour basculer vers le bas le nez dudit aéronef roulant sur le sol, est remarquable en ce que, préalablement à ladite prise de contact dudit aéronef avec le sol :
- on braque ledit empennage horizontal réglable, dans le sens à cabrer, avec une valeur effective d'angle d'inclinaison inférieure à une valeur correspondant à une configuration usuelle dans laquelle lesdites gouvernes de profondeur se trouvent dans le prolongement aérodynamique dudit empennage horizontal réglable ; et
- on braque lesdites gouvernes de profondeur dans le sens à cabrer, de façon que la combinaison de l'action à cabrer dudit empennage horizontal réglable et de l'action à cabrer desdites gouvernes de profondeur engendre une force aérodynamique résultante à cabrer qui est au moins approximativement égale à celle engendrée par l'ensemble dudit empennage horizontal réglable et desdites gouvernes de profondeur dans ladite configuration usuelle.

Ainsi, grâce à la présente invention, pour une action aérodynamique précédant la prise de contact de l'aéronef avec le sol équivalente à celle usuellement obtenue, on décale vers les valeurs à cabrer la position des gouvernes de profondeur à partir de laquelle s'effectuera le braquage à piquer de celle-ci après ladite prise de contact. Par suite, la course de braquage à piquer desdites gouvernes de profondeur par rapport audit empennage horizontal réglable est augmentée, ce qui, bien entendu, accroît l'autorité des gouvernes de profondeur pour faire basculer le nez de l'aéronef vers le bas.

Des expériences et des calculs ont montré que, pour l'avion gros porteur AIRBUS A380, une diminution de 5° de l'angle d'inclinaison de l'empennage horizontal réglable, par rapport à ladite configuration usuelle, entraînait un décalage de 10° dans le sens à cabrer des gouvernes de profondeur.

De préférence, la diminution de l'angle d'inclinaison à cabrer dudit empennage horizontal réglable, égale à la différence entre ladite valeur correspondant à la configuration usuelle et ladite valeur effective, est choisie pour entraîner une augmentation du débattement maximal à piquer desdites gouvernes de profondeur au plus égale au tiers du débattement maximal à cabrer que lesdites gouvernes de profondeur présentent dans ladite configuration usuelle.

Les figures du dessin annexé feront bien comprendre comment l'invention peut être réalisée. Sur ces figures, des références identiques désignent des éléments semblables.

La figure 1 montre, en perspective schématique, un aéronef civil gros porteur pourvu d'un empennage horizontal réglable.

La figure 2 illustre, en trois positions successives, la phase d'atterrissage dudit aéronef.

Les figures 3A et 3B montrent le positionnement usuel de l'empennage horizontal réglable et des gouvernes de profondeur qui y sont attachées, respectivement avant et à partir de la prise de contact avec le sol.

Les figures 4A et 4B montrent un exemple de positionnement, conforme à l'invention, de l'empennage horizontal réglable et des gouvernes de profondeur, respectivement avant et à partir de la prise de contact avec le sol.

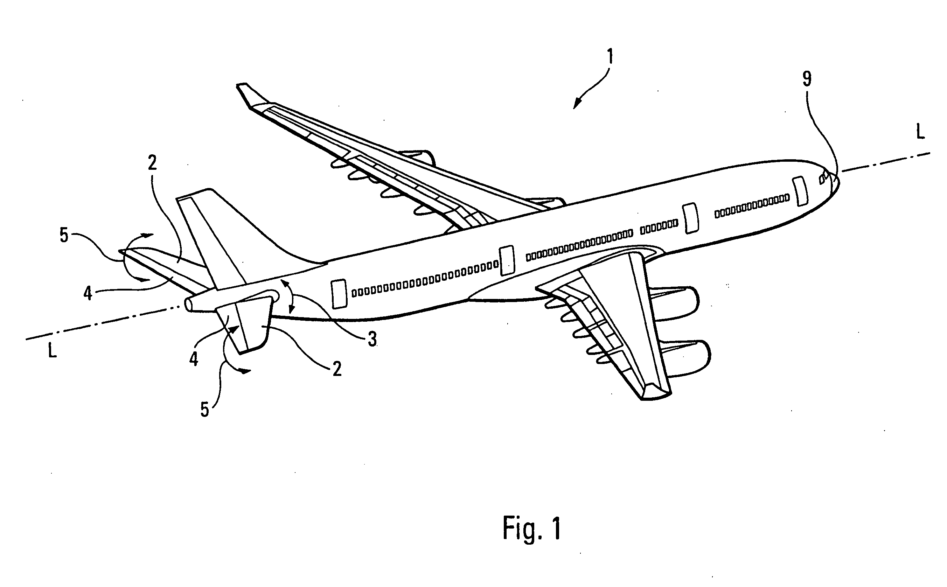

L'avion gros porteur 1, montré schématiquement par la figure 1, présente un axe longitudinal L-L et comporte un empennage horizontal 2 réglable en inclinaison, comme cela est illustré par la double flèche 3. Au bord arrière dudit empennage horizontal réglable 2, sont articulées des gouvernes de profondeur 4 pouvant tourner par rapport audit empennage 2, comme cela est illustré par la double flèche 5.

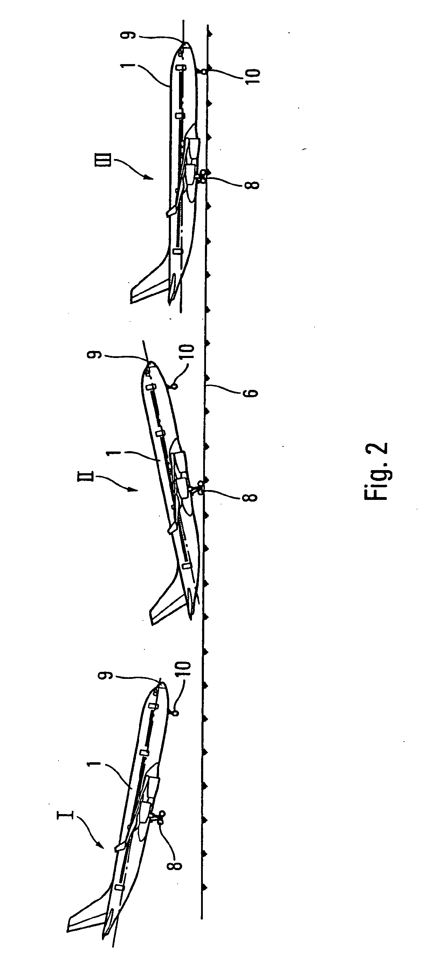

Sur la figure 2, on a illustré trois situations I, II et III que connaît ledit avion 1 lors de son atterrissage.

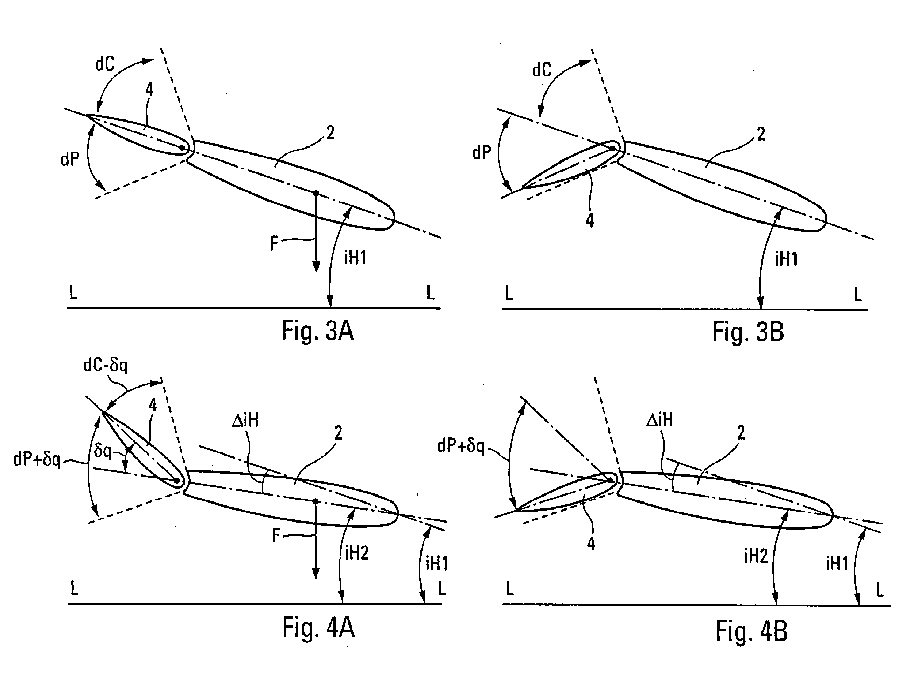

Dans la situation I, l'avion termine son arrondi en s'approchant du sol 6. Pendant cette fin d'arrondi, dans la technique usuelle, l'empennage horizontal réglable 2 est incliné d'un angle iH1 par rapport audit axe longitudinal L-L et les gouvernes de profondeur 4 sont dans une position prolongeant aérodynamiquement ledit empennage horizontal réglable 2 avec un débattement maximal à cabrer dC et un débattement maximal à piquer dP (voir la figure 3A). Dans cette configuration usuelle, l'ensemble dudit empennage horizontal réglable 2 et des gouvernes de profondeur 4 engendre une force aérodynamique à cabrer F.

Après prise de contact de l'avion 1 avec le sol (situation II sur la figure 2), celui-ci, grâce à son train principal 8, roule sur le sol 6 avec son nez 9 dirigé vers le haut. Aussi, de façon usuelle, pour faire basculer le nez 9 vers le sol 6, le pilote actionne les gouvernes de profondeur 4 pour leur faire prendre une position à piquer, comme représenté sur la figure 3B. Ainsi, le nez 9 peut basculer vers le sol 6 et le train avant 10 peut toucher le sol à son tour (situation III sur la figure 2).

Cependant, comme mentionné ci-dessus, il peut se faire que l'autorité à piquer des gouvernes de profondeur 4 soit insuffisante --même si celles-ci sont braquées à piquer de l'angle correspondant au débattement maximal dP, comme cela est représenté sur la figure 3B-- pour faire basculer rapidement le nez 9 vers le sol. Dans ce cas, l'avion 1 roule longtemps sur le sol 6 dans la situation II, avant de pouvoir se trouver dans la situation III.

Pour remédier à cet inconvénient, la présente invention opère de la façon illustrée sur les figures 4A et 4B, à savoir :
- pendant l'arrondi illustré par la situation I de la figure 2, l'empennage horizontal réglable 2 est incliné d'un angle à cabrer iH2, inférieur à l'angle iH1, d'une quantité ΔiH, et
- simultanément, les gouvernes de profondeur 4 sont braquées à cabrer pour prendre un angle à cabrer δq par rapport audit empennage 2.

Dans ce processus, illustré par la figure 4A, les angles iH2 et δq sont choisis pour que la force aérodynamique à cabrer engendrée par la combinaison de l'empennage horizontal réglable 2 et des gouvernes de profondeur 4 soit au moins approximativement égale à la force aérodynamique F de la configuration de la figure 3A.

Il résulte de ce qui précède que le débattement maximal à piquer des gouvernes 4 est augmenté de δq et devient dP+δq (voir la figure 4B).

Grâce à une telle augmentation du débattement maximal à piquer, les gouvernes de profondeur acquièrent l'autorité nécessaire pour faire rapidement basculer le nez 9 vers le sol 6.

Ainsi, dans la configuration conforme à la présente invention illustrée par les figures 4A et 4B, les gouvernes de profondeur 4 ont, après la prise de contact avec le sol, une autorité de basculement supérieure à celle qu'elles ont dans la configuration usuelle des figures 3A et 3B.

Par ailleurs, pour conserver à l'avion 1 une possible autorité à cabrer en cas de besoin, on veille à ce que l'augmentation δq du débattement maximal à piquer soit au plus égale au tiers du débattement maximal à cabrer dC, en configuration usuelle.

## Revendications

1. Procédé pour améliorer l'atterrissage d'un aéronef (1) comportant un empennage horizontal réglable (2) auquel sont articulées des gouvernes de profondeur (4), ledit empennage horizontal réglable (2) étant braqué à cabrer d'un angle d'inclinaison de valeur prédéterminée en vue de la prise de contact dudit aéronef (1) avec le sol (6) et lesdites gouvernes de profondeur (4) étant braquées à piquer après ladite prise de contact pour basculer vers le bas le nez (9) dudit aéronef roulant sur le sol,
**caractérisé en ce que**, préalablement à ladite prise de contact dudit aéronef (1) avec le sol (6) :
- on braque ledit empennage horizontal réglable (2), dans le sens à cabrer, avec une valeur effective (iH2) d'angle d'inclinaison inférieure à une valeur (iH1) correspondant à une configuration usuelle dans laquelle lesdites gouvernes de profondeur (4) se trouvent dans le prolongement aérodynamique dudit empennage horizontal réglable (2) ; et
- on braque lesdites gouvernes de profondeur (4) dans le sens à cabrer, de façon que la combinaison de l'action à cabrer dudit empennage horizontal réglable (2) et de l'action à cabrer desdites gouvernes de profondeur (4) engendre une force aérodynamique résultante à cabrer qui est au moins approximativement égale à celle (F) engendrée par l'ensemble dudit empennage horizontale réglable (2) et desdites gouvernes de profondeur (4) dans ladite configuration usuelle.

2. Procédé selon la revendication 1,
**caractérisé en ce que** la diminution de l'angle d'inclinaison à cabrer dudit empennage horizontal réglable (2), égale à la différence (ΔiH) entre ladite valeur (iH1) correspondant à la configuration usuelle et ladite valeur effective (iH2), entraîne une augmentation (δq) du débattement maximal à piquer (dP) desdites gouvernes de profondeur (4) au plus égale au tiers du débattement maximal à cabrer (dC) que lesdites gouvernes de profondeur (4) présentent dans ladite configuration usuelle.

## Claims

1. A process for improving the landing of an aircraft (1) comprising an adjustable horizontal tail plane (2) to which are hinged elevators (4), said adjustable horizontal tail plane (2) being nose-up deflected by an angle of inclination of predetermined value with a view to the making of contact of said aircraft (1) with the ground (6) and said elevators (4) being nose-down deflected after said making of contact so as to tilt down the nose (9) of said aircraft rolling over the ground,
**characterized in that** prior to said making of contact of said aircraft (1) with the ground (6):
- said adjustable horizontal tail plane (2) is deflected, in the nose-up direction, with a lower actual value (iH2) of angle of inclination than a value (iH1) corresponding to a customary configuration in which said elevators (4) are in direct aerodynamic alignment with said adjustable horizontal tail plane (2); and
- said elevators (4) are deflected in the nose-up direction, in such a way that the combination of the nose-up action of said adjustable horizontal tail plane (2) and of the nose-up action of said elevators (4) engenders a nose-up resultant aerodynamic force which is at least approximately equal to that (F) engendered by the assembly of said adjustable horizontal tail plane (2) and of said elevators (4) in said customary configuration.

2. The process as claimed in claim 1,
**characterized in that** the decreasing of the angle of nose-up inclination of said adjustable horizontal tail plane (2), equal to the difference (ΔiH) between said value (iH1) corresponding to the customary configuration and said actual value (iH2), brings about an increase (δq) of the maximum nose-down swing (dP) of said elevators (4) at most equal to a third of the maximum nose-up swing (dC) that said elevators (4) exhibit in said customary configuration.

## Patentansprüche

1. Verfahren zum Verbessern der Landung eines Flugzeuges (1), das ein verstellbares Höhenleitwerk (2) aufweist, an dem Höhenruder (4) angelenkt sind, wobei das verstellbare Höhenleitwerk (2) angesichts der bevorstehenden Berührung des Flugzeuges
(1) mit dem Boden (6) in einem Neigungswinkel von vorherbestimmtem Wert höhentrimmungsgemäß ausgerichtet wird und die Höhenruder (4) nach der Bodenberührung tiefentrimmungsgemäß ausgerichtet werden, so dass die Nase (9) des auf dem Boden rollenden Flugzeuges nach unten kippt,
**dadurch gekennzeichnet, dass** man, bevor das Flugzeug (1) mit dem Boden (6) Kontakt aufnimmt:
- das verstellbare Höhenleitwerk (2) in Höhentrimmungsrichtung ausrichtet, wobei der Neigungswinkel einen Effektivwert (iH2) hat, der kleiner ist als ein Wert (iH1), der einer üblichen Konfiguration entspricht, in der die Höhenruder (4) in aerodynamischer Verlängerung des verstellbaren Höhenleitwerks (2) stehen; und
- die Höhenruder (4) in Höhentrimmungsrichtung ausrichtet, so dass die Kombination aus der Höhentrimmung durch das verstellbare Höhenleitwerk (2) und der Höhentrimmung durch die Höhenruder (4) eine aerodynamische, das Flugzeug hochziehende Mittelkraft erzeugt, die wenigstens annähernd gleich jener Kraft (F) ist, die von der Gesamtkonstruktion des verstellbaren Höhenleitwerks (2) und der Höhenruder (4) in der üblichen Konfiguration erzeugt wird.

2. Verfahren nach Anspruch 1,
**dadurch gekennzeichnet, dass** die Verkleinerung des Neigungswinkels des verstellbaren Höhenleitwerks (2) zur Höhentrimmung, die der Differenz (ΔiH) zwischen dem der üblichen Konfiguration entsprechenden Wert (iH1) und dem Effektivwert (iH2) entspricht, eine Vergrößerung (δq) des tiefentrimmungsgemäßen Maximalausschlags (dP) der Höhenruder (4) bewirkt, die höchstens gleich dem Drittel des höhentrimmungsgemäßen Maximalausschlags (dC) ist, den die Höhenruder (4) in der üblichen Konfiguration aufweisen.
